(19) **Europäisches Patentamt / European Patent Office / Office européen des brevets**

(11) **EP 3 510 253 B1**

(12) **FASCICULE DE BREVET EUROPEEN**

(45) Date de publication et mention
de la délivrance du brevet:
**30.09.2020 Bulletin 2020/40**

(21) Numéro de dépôt: **17768490.9**

(22) Date de dépôt: **24.08.2017**

(51) Int Cl.:
*F01D 17/16* (2006.01)    *F04D 27/02* (2006.01)
*F16C 32/04* (2006.01)

(86) Numéro de dépôt international:
**PCT/FR2017/052270**

(87) Numéro de publication internationale:
**WO 2018/046818 (15.03.2018 Gazette 2018/11)**

(54) **DISPOSITIF DE PILOTAGE DES VOLETS D'ENTRÉE D'AIR VIA UN ACTIONNEUR PIÉZOÉLECTRIQUE MULTICOUCHE**

VORRICHTUNG ZUR STEUERUNG VON LUFTEINLASSKLAPPEN MIT EINEM MEHRSCHICHTIGEN PIEZOELEKTRISCHEN AKTUATOR

DEVICE FOR CONTROLLING AIR INTAKE FLAPS USING A MULTILAYER PIEZOELECTRIC ACTUATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2016 FR 1658348**

(43) Date de publication de la demande:
**17.07.2019 Bulletin 2019/29**

(73) Titulaire: **Safran Helicopter Engines
64510 Bordes (FR)**

(72) Inventeurs:
• **VONFELT, Jean-Julien, Camille
77550 Moissy-Crayamel (FR)**
• **KLONOWSKI, Thomas
77550 Moissy-Crayamel (FR)**
• **MOUTAUX, Antoine
77550 Moissy-Crayamel (FR)**

(74) Mandataire: **Cabinet Beau de Loménie
158, rue de l'Université
75340 Paris Cedex 07 (FR)**

(56) Documents cités:
**DE-A1-102014 001 034    US-A1- 2014 286 745**

EP 3 510 253 B1

**Description**

Arrière-plan de l'invention

La présente invention se rapporte au domaine général des compresseurs et des turbines de moteur aéronautique (notamment d'avion ou d'hélicoptère). Elle vise plus précisément la commande des volets d'entrée d'air (IGV pour Inlet Guides Vanes) de moteur à turbine à gaz.

Les actionneurs des IGV sont utilisés pour contrôler la position des pales de pré-rotation situées en amont du ou des étages compresseur sur les turbomoteurs pour hélicoptères (voir par exemple US 2014/0286745). La fonction de cet actionneur consiste à orienter le flux d'air entrant dans le moteur en amont du compresseur. La variation de la position angulaire des pales de pré-rotation permet d'optimiser les performances globales du moteur (transitoires et consommation spécifique).

La fonction de pilotage des volets d'entrée d'air est le plus souvent assurée par un vérin hydraulique alimenté par le circuit de carburant dont le débit et les pressions sont directement indexées sur le régime du générateur de gaz. Une telle architecture présente toutefois de nombreux inconvénients.

Tout d'abord, du fait de leur réversibilité, les vérins hydrauliques actuels ne sont pas à « mémoire de position » (dite aussi fail-freeze), c'est-à-dire qu'en cas de panne ils ne maintiennent pas la dernière position pilotée. Ensuite, ces vérins sont dimensionnés pour une grande gamme de pression et de débit, ce qui, du fait des interactions avec le circuit carburant, engendre à chaque appel de débit du vérin de réelles perturbations sur le système de dosage carburant. En effet, le delta de pression de servitude varie fortement en fonction du point de fonctionnement moteur (faible delta P au ralenti et fort delta P à haut régime). De plus, ce surdimensionnement a un impact non négligeable sur la masse du moteur et provoque un échauffement inutile du carburant et indirectement un prélèvement de puissance non souhaité sur la boite d'accessoires. Enfin, ces vérins ne sont pilotables que dans le cas où le moteur est en fonctionnement, ce qui est particulièrement pénalisant dans le cadre de certaines opérations quotidiennes de maintenance, comme pour les endoscopies du moteur où les volets doivent être déplacés sans démarrer le moteur, car cela nécessite de faire appel à un groupe hydraulique externe.

On connait avec le brevet US7,096,657 une commande de volets d'entrée d'air au moyen d'un actionneur électrique redondé qui peut être soit un moteur à courant continu sans balai soit un moteur à courant alternatif à induction ou réluctance variable. Or, le recours à un moteur sans balais nécessite une électronique de commande particulièrement complexe et contraignante d'un point de vue de la compatibilité électromagnétique et les puissances engagées ne sont pas suffisantes dans toutes les conditions de vol. Pareillement, en cas de court-circuit sur le moteur à réluctance variable ou son électronique de commande, le couple de freinage généré par le court-circuit est très faible voir nul, ce qui nécessite obligatoirement le recours à un frein électrique (energize-to-release type brakes) externe pour geler la dernière position pilotée. Cette information est en effet primordiale si l'on veut passer en toute sécurité dans un mode de pilotage dégradé du moteur. Il en est de même, avec l'un ou l'autre de ces deux types de moteur, en cas de perte de l'alimentation électrique.

Il existe donc aujourd'hui un besoin de pilotage des volets d'entrée d'air au moyen d'un nouvel actionneur qui ne présente pas les contraintes précitées.

Objet et résumé de l'invention

La présente invention a donc pour but de pallier les inconvénients précités en proposant un actionneur performant et optimisé pour la seule fonction de commande des IGVs et présentant en outre un comportement particulièrement sécurisé.

Ce but est atteint grâce à un actionneur électrique de volets d'entrée d'air de moteur à turbine à gaz comportant une partie fixe solidaire d'une partie stationnaire dudit moteur et une partie mobile en liaison mécanique avec lesdits volets d'entrée d'air, caractérisé en ce que ledit actionneur électrique comporte, régulièrement répartis à la périphérie de ladite partie mobile et fixés à ladite partie fixe, des électroaimants fixes et disposés entre lesdits électroaimants fixes des électroaimants mobiles solidarisés chacun de part et d'autre à des premier et second éléments piézo-électriques, lesdits électroaimants mobiles et lesdits premier et second éléments piézo-électriques disposant d'un degré de liberté de déplacement par rapport à ladite partie mobile.

Avec cette nouvelle architecture électrique, le surdimensionnement structurel des systèmes de l'art antérieur est supprimé et le circuit carburant peut alors être optimisé indépendamment de la fonction de commande des IGVs.

Avantageusement, la partie fixe est un stator d'actionneur rotatif, la partie mobile un rotor d'actionneur rotatif et ledit degré de liberté de déplacement est un degré de liberté en rotation autour d'un axe de rotation dudit rotor.

De préférence, chaque élément piézo-électrique est formé d'une série de N céramiques disposée en une ou plusieurs couches.

Avantageusement, ledit élément piézo-électrique comporte deux couches superposées de dix céramiques mises en parallèles.

De préférence, lesdits électroaimants fixes constituent une partie intégrale dudit stator dont ils forment alors une denture interne.

Avantageusement, lesdits électroaimants fixes sont raccordés électriquement en parallèle à une première source de tension continue DC1 et lesdits électroaimants mobiles sont raccordés électriquement en parallèle à une seconde source de tension continue DC2.

De préférence, lesdites sources de tension continue délivrent deux signaux opposés.

Avantageusement, ledit premier élément piézo-électrique est raccordé électriquement en parallèle à une première source de tension alternative AC1 et ledit second élément piézo-électrique est raccordé électriquement en parallèle à une seconde source de tension alternative AC2.

De préférence, lesdites sources de tension alternative délivrent deux tensions sinusoïdales en opposition de phase caractérisées par les relations suivantes :

$$AC1 = A \sin \omega(t) \text{ et } AC2 = A \sin (\omega(t) + \pi).$$

L'invention concerne également un moteur à turbine à gaz comprenant au moins un actionneur électrique précité.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est une vue schématique d'un moteur à turbine à gaz auquel est appliqué l'invention ;
- la figure 2 montre un premier exemple d'un actionneur rotatif électrique de commande des volets d'entrée d'air du moteur de la figure 1 conforme à l'invention ;
- la figure 3 illustre les différentes alimentations électriques nécessaires au fonctionnement de l'actionneur de la figure 2 ;
- les figures 4A-4D montrent les différentes étapes de déplacement du rotor de l'actionneur de la figure 2 ; et
- la figure 5 montre un second exemple d'un actionneur linéaire électrique de commande des volets d'entrée d'air du moteur de la figure 1 conforme à l'invention.

Description détaillée de l'invention

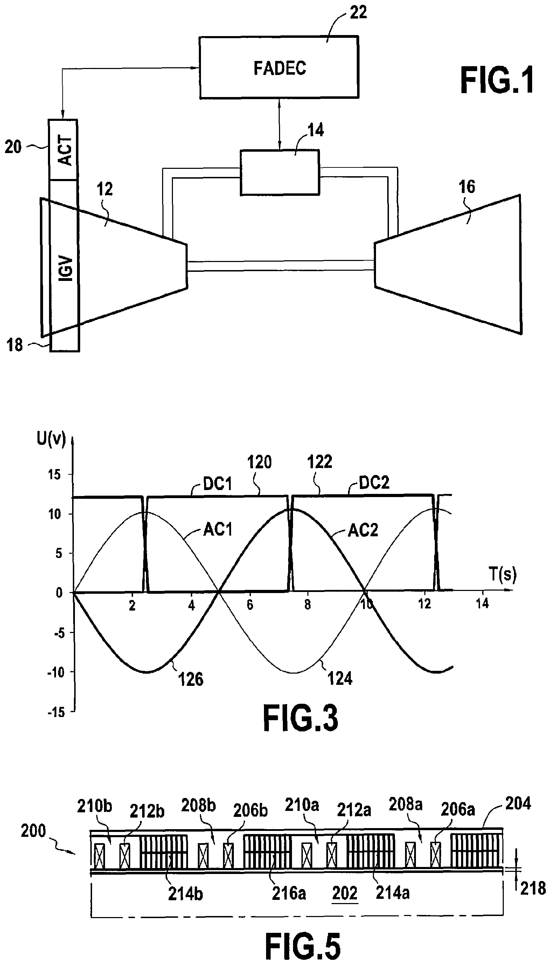

La figure 1 illustre de façon schématique un moteur à turbine à gaz 10 comprenant classiquement un compresseur 12, une chambre de combustion 14 et une turbine 16 destinée à l'entrainement des pales du moteur (non représentées). En entrée du compresseur 12 sont disposés des volets entrée d'air (IGV 18) dont le déplacement en rotation est assuré par un ou plusieurs actionneurs (ACT 20) commandés depuis un calculateur central (FADEC 22) qui assure en outre la gestion du moteur et notamment l'injection des gaz au niveau de la chambre de combustion.

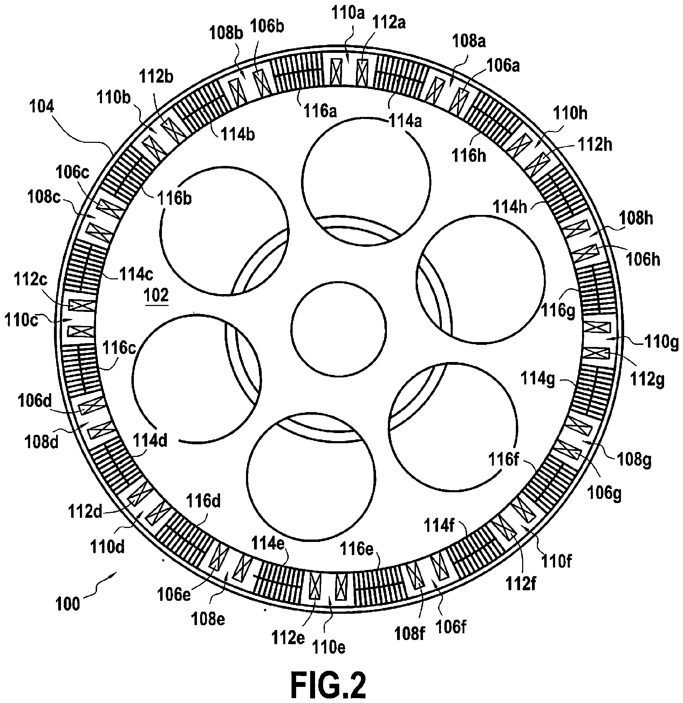

Selon l'invention, l'actionneur des volets d'entrée d'air est un actionneur électrique qui se présente sous la forme du moteur piézo-électrique rotatif particulier illustré à la figure 2.

Le moteur piézo-électrique 100 comporte un rotor central 102 qu'entoure un stator annulaire 104. Le rotor central, avantageusement perforé pour un gain de masse, est en liaison fixe avec le levier qui actionne les volets d'entrée d'air, le levier étant en liaison pivot avec le carter du moteur alors que le stator est en liaison fixe avec une partie stationnaire du moteur. Régulièrement répartis à la périphérie du rotor et fixés mécaniquement ou collés au stator, selon la nature du matériau rotor, des corps magnétiques forment avec des bobinages associés 106a - 106h des électroaimants fixes 108a - 108h positionnés à intervalle régulier. Les corps magnétiques peuvent aussi constituer une partie intégrale du stator dont ils forment alors comme une denture interne.

Entre ces électroaimants fixes sont disposés des électroaimants 110a - 110h mobiles (chacun formé de corps magnétiques et de bobinages associés 112a - 112h) solidarisés chacun de part et d'autre à un élément piézo-électrique 114a - 114h ; 116a - 116h. Chaque élément piézo-électrique est formé d'une série de céramiques disposée en une ou plusieurs couches. Dans l'exemple illustré, qui ne saurait être considéré comme limitatif, l'élément piézo-électrique comporte deux couches superposées de dix céramiques mises en parallèle. La hauteur de la ou des couches de céramique correspond à celle des corps magnétiques fixes ou mobiles qui les entourent, de sorte que la face interne de ces différents constituants forme une même ligne de contact tangente avec le rotor central 102. Avec cette configuration, les électroaimants mobiles 110a - 110h et les premier et second éléments piézo-électriques 114a - 114h ; 116a - 116h disposent d'un degré de liberté de déplacement en rotation autour de l'axe du rotor central 102, sans aucun frottement entre stator et rotor (dû à la présence d'un entrefer non référencé), au contraire d'une configuration de moteur piézo-électrique de type connu. Cet entrefer associé à la façon d'utiliser les éléments piézo-électrique permet de contrer un des principaux problèmes liés à cette technologie piézo-électrique : l'usure des polymères sur lesquels adhèrent les composants piézo-électriques. En limitant / supprimant le frottement on augmente la durée de vie et la disponibilité de l'équipement, le rendant compatible avec une utilisation aéronautique.

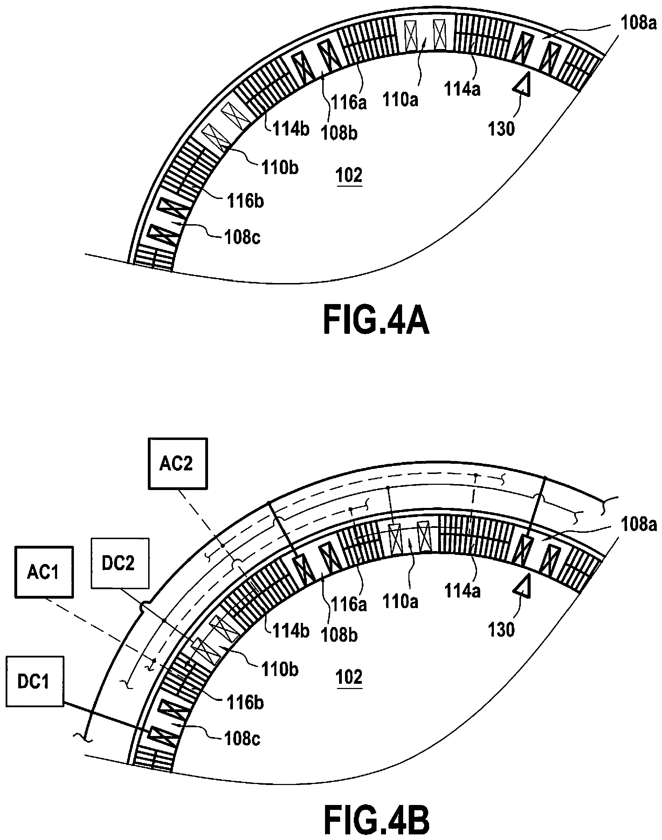

Le fonctionnement du moteur est maintenant explicité en regard de la figure 3 et des figures 4A à 4D qui montrent les signaux de commande et le déplacement correspondant du rotor central au cours d'un cycle de fonctionnement du moteur.

Comme l'illustre la figure 4B, les électroaimants fixes 108a, 108b, 108c sont raccordés électriquement en parallèle à une première source de tension continue DC1 (courbe 120 de la figure 3) et les électroaimants mobiles 110a, 110b sont raccordés électriquement en parallèle à une seconde source de tension continue DC2 (courbe 122 de la figure 3), les sources DC1 et DC2 délivrant des signaux opposés. Le premier élément piézo-électrique 114a, 114b est raccordé électriquement en parallèle à une première source de tension alternative AC1 (courbe 124 de la figure 3) et le second élément piézo-électrique 116a, 116b est raccordé électriquement en parallèle à une seconde source de tension alternative AC2 (courbe 126 de la figure 3). Les sources de tension alternative délivrent deux tensions sinusoïdales en opposition de phase et sont donc caractérisées par les relations suivantes :

$$AC1 = A \sin \omega(t) \text{ et } AC2 = A \sin (\omega(t)+ \pi)$$

Pour faire avancer le moteur piézoélectrique, il faut alimenter les éléments piézo-électriques et les électroaimants en deux temps définissant quatre phases successives de la manière suivante :

La figure 4A montre la phase initiale dans laquelle les électroaimants fixes 108a, 108b, 108c sont parcourus par un courant (la source de tension DC1 est positive) et maintiennent donc le contact avec le rotor central 102. Les électroaimants mobiles 110a, 110b sont désactivés (la source de tension continue DC2 est à zéro) et les premier et second éléments piézo-électriques 114a, 114b ; 116a, 116b sont en position initiale de repos.

Sur la figure 4B, pendant que les électroaimants fixes 108a, 108b, 108c parcourus par un courant, maintiennent le contact avec le rotor central 102, les premiers éléments piézo-électriques 114a, 114b s'allongent et les seconds éléments piézo-électriques 116a, 116b se rétractent entrainant dans leur mouvement d'allongement/rétractation simultané (dans le sens illustré par la flèche) les électroaimants mobiles 110a, 110b non alimentés (la source de tension continue DC2 est maintenue à zéro) auxquels ils sont attachés.

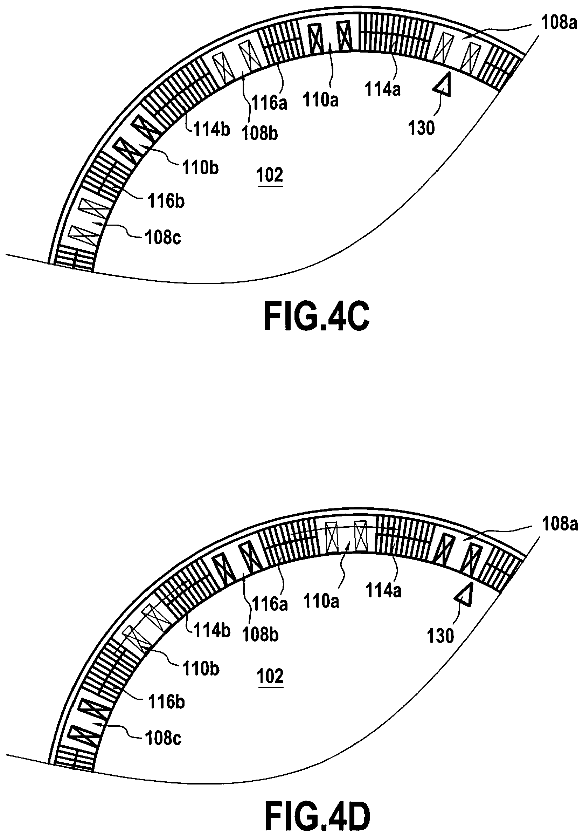

Sur la figure 4C, le mouvement d'élongation/rétractation des éléments piézo-électriques est achevé et les électroaimants mobiles 110a, 110b sont alors alimentés (la source de tension DC2 est rendue positive) pour maintenir le contact avec le rotor central 102. Simultanément, les électroaimants fixes 108a, 108b, 108c sont désactivés (la source de tension continue DC1 est mise à zéro).

La figure 4D montre la dernière phase lorsque les premiers éléments piézo-électriques 114a, 114b se rétractent et les seconds éléments piézo-électriques 116a, 116b s'allongent pour reprendre leur forme initiale, entraînant avec eux les électroaimants mobiles 110a, 110b (dans le sens illustré par la flèche) et donc aussi le rotor central 102 sur lequel ils sont maintenus en contact. On constate avec la rotation de l'index 130, la rotation effective du moteur correspondant à un cycle d'allongement/rétractation des éléments piézo-électriques.

Pour faire fonctionner le moteur dans le sens inverse, il faut inverser le sens de pilotage des électroaimants ou permuter le déphasage entre les première et seconde sources de tension alternative AC1 et AC2 de telle manière que la seconde soit en avance sur la première.

On notera que si la description précédente a été faite en regard d'une configuration de moteur rotatif, il est clair que celle-ci a été donnée à titre d'exemple et qu'une configuration de moteur linéaire peut tout aussi bien convenir comme le montre la figure 5.

Ainsi, un tel moteur piézo-électrique linéaire 200 comporte une partie mobile 202 et une partie fixe 204. Comme dans le mode de réalisation précédent, la partie mobile est en liaison fixe avec le levier qui actionne les volets d'entrée d'air et la partie mobile est en liaison fixe avec une partie stationnaire du moteur. Régulièrement répartis à la périphérie de cette partie mobile et fixés à la partie fixe, des corps magnétiques forment avec des bobinages associés 206a - 206b des électroaimants fixes 208a - 208b positionnés à intervalle régulier. Les corps magnétiques peuvent aussi constituer une partie intégrale de cette partie fixe. Entre ces électroaimants fixes sont disposés des électroaimants 210a - 210b mobiles (chacun formé de corps magnétiques et de bobinages associés 212a - 212b) solidarisés chacun de part et d'autre à un élément piézo-électrique 214a - 114b ; 216a - 216b formés chacun d'une série de céramiques disposée en une ou plusieurs couches, la face interne de ces différents constituants formant une même ligne de contact tangente(à un entrefer 218 près exagérément grossis pour les besoins de l'explication) avec la partie mobile 202. Avec cette configuration, les électroaimants mobiles 210a - 210b et les premier et second éléments piézo-électriques 214a - 214b ; 216a - 216b disposent d'un degré de liberté de déplacement en translation le long de la partie mobile 202, sans aucun frottement entre stator et rotor.

Ainsi, avec l'invention, de part une conversion directe électrique/mécanique et de part une conception du contrôle commande simplifié, le gain en masse est très important, la masse de l'actionneur (de l'ordre de 500g) pouvant être diminuée d'un facteur 5 par rapport un actionneur IGV hydraulique pesant classiquement environ 2500g.

En outre, les performances dynamiques d'un actionneur piézo-électrique sont aussi bien meilleures : jusqu'à 200mm/s à pleine charge (100daN) contre 8.5mm/s pour un actionneur hydraulique type RTM322 et un gain en précision de quelques micromètres (contre +/-0,2mm sur un RTM322).

**Revendications**

1. Actionneur électrique de volets d'entrée d'air de moteur à turbine à gaz comportant une partie fixe (104, 204) solidaire d'une partie stationnaire dudit moteur et une partie mobile (102, 202) en liaison mécanique avec lesdits volets d'entrée d'air, **caractérisé en ce que** ledit actionneur électrique (100, 200) comporte, régulièrement répartis à la périphérie de ladite partie mobile et fixés à ladite partie fixe, des électroaimants fixes (108a - 108h ; 208a - 208c) et disposés entre lesdits électroaimants fixes des électroaimants mobiles (110a - 110h ; 210a - 210c) solidarisés chacun de part et d'autre à des premier (114a - 114h ; 214a - 214c) et second (116a, 116h ; 216a, 216c) éléments piézo-électriques, lesdits électroaimants mobiles et lesdits premier et second éléments piézo-électriques disposant d'un degré de liberté de déplacement par rapport à ladite partie mobile.

2. Actionneur électrique selon la revendication 1, dans lequel la partie fixe est un stator d'actionneur rotatif (104), la partie mobile un rotor d'actionneur rotatif (102) et ledit degré de liberté de déplacement est un degré de liberté en rotation autour d'un axe de rotation dudit rotor.

3. Actionneur électrique selon la revendication 1 ou la revendication 2, dans lequel chaque élément piézo-électrique est formé d'une série de N céramiques disposée en une ou plusieurs couches.

4. Actionneur électrique selon la revendication 3, dans lequel ledit élément piézo-électrique comporte deux couches superposées de dix céramiques mises en parallèle.

5. Actionneur électrique selon la revendication 3 ou la revendication 4, dans lequel lesdits électroaimants fixes constituent une partie intégrale dudit stator dont ils forment alors une dentelure interne.

6. Actionneur électrique selon l'une quelconque des revendications 1 à 5, dans lequel lesdits électroaimants fixes sont raccordés électriquement en parallèle à une première source de tension continue DC1 et lesdits électroaimants mobiles sont raccordés électriquement en parallèle à une seconde source de tension continue DC2.

7. Actionneur électrique selon la revendication 6, dans lequel lesdites sources de tension continue délivrent deux signaux opposés.

8. Actionneur électrique selon l'une quelconque des revendications 1 à 5, dans lequel ledit premier élément piézo-électrique est raccordé électriquement en parallèle à une première source de tension alternative AC1 et ledit second élément piézo-électrique est raccordé électriquement en parallèle à une seconde source de tension alternative AC2.

9. Actionneur électrique selon la revendication 8, dans lequel lesdites sources de tension alternative délivrent deux tensions sinusoïdales en opposition de phase **caractérisées par** les relations suivantes :

$$AC1 = A \sin \omega(t) \text{ et } AC2 = A \sin (\omega(t)+ \pi).$$

10. Moteur à turbine à gaz comprenant au moins un actionneur électrique selon l'une quelconque des revendications 1 à 9.

**Patentansprüche**

1. Elektrischer Aktor für Lufteinlassklappen eines Gasturbinentriebwerks, umfassend einen festen Teil (104, 204), der mit einem stationären Teil des Triebwerks fest verbunden ist, und einen beweglichen Teil (102, 202), der mit den Lufteinlassklappen in mechanischer Verbindung steht, **dadurch gekennzeichnet, dass** der elektrische Aktor (100, 200) feste Elektromagnete (108a - 108h; 208a - 208c), die am Umfang des beweglichen Teils gleichmäßig verteilt und an dem festen Teil befestigt sind, sowie bewegliche Elektromagnete (110a - 110h; 210a - 210c) umfasst, die zwischen den festen Elektromagneten angeordnet und jeweils auf beiden Seiten mit ersten (114a - 114h; 214a - 214c) und zweiten (116a, 116h; 216a, 216c) piezoelektrischen Elementen fest verbunden sind, wobei die beweglichen Elektromagnete sowie die ersten und zweiten piezoelektrischen Elemente über einen Bewegungsfreiheitsgrad gegenüber dem beweglichen Teil verfügen.

**2.** Elektrischer Aktor nach Anspruch 1, bei dem der feste Teil ein Rotationsaktorstator (104) ist, der bewegliche Teil ein Rotationsaktorrotor (102) ist und der Bewegungsfreiheitsgrad ein Drehfreiheitsgrad um eine Rotationsachse des Rotors ist.

**3.** Elektrischer Aktor nach Anspruch 1 oder Anspruch 2, bei dem jedes piezoelektrische Element aus einer Reihe von N Keramiken gebildet ist, die in einer oder mehreren Schichten angeordnet ist.

**4.** Elektrischer Aktor nach Anspruch 3, bei dem das piezoelektrische Element zwei übereinander liegende Schichten aus zehn parallel angeordneten Keramiken umfasst.

**5.** Elektrischer Aktor nach Anspruch 3 oder Anspruch 4, bei dem die festen Elektromagnete einen integralen Bestandteil des Stators bilden, von dem sie dann eine Innenverzahnung bilden.

**6.** Elektrischer Aktor nach einem der Ansprüche 1 bis 5, bei dem die festen Elektromagnete zu einer ersten Gleichspannungsquelle DC1 elektrisch parallel geschaltet sind und die beweglichen Elektromagnete zu einer zweiten Gleichspannungsquelle DC2 elektrisch parallel geschaltet sind.

**7.** Elektrischer Aktor nach Anspruch 6, bei dem die Gleichspannungsquellen zwei entgegengesetzte Signale liefern.

**8.** Elektrischer Aktor nach einem der Ansprüche 1 bis 5, bei dem das erste piezoelektrische Element zu einer ersten Wechselspannungsquelle AC1 elektrisch parallel geschaltet ist und das zweite piezoelektrische Element zu einer zweiten Wechselspannungsquelle AC2 elektrisch parallel geschaltet ist.

**9.** Elektrischer Aktor nach Anspruch 8, bei dem die Wechselspannungsquellen zwei gegenphasige Sinusspannungen liefern, die durch die folgenden Beziehungen gekennzeichnet sind:

$$AC1 = A \sin \omega(t) \text{ und } AC2 = A \sin (\omega(t) + \pi).$$

**10.** Gasturbinentriebwerk, das wenigstens einen elektrischen Aktor nach einem der Ansprüche 1 bis 9 umfasst.

**Claims**

**1.** An electric actuator for inlet guide vanes of a gas turbine engine, the electric actuator comprising a fixed portion (104, 204) secured to a stationary portion of said engine and a movable portion (102, 202) that is mechanically connected to said inlet guide vanes, said electric actuator (100, 200) being **characterized in that** it comprises stationary electromagnets (108a-108h; 208a-208c) distributed at regular intervals around the periphery of said movable portion and fastened to said fixed portion, and movable electromagnets (110a-110h; 210a-210c) arranged between said stationary electromagnets, each movable electromagnet (110a-110h; 210a-210c) being secured on either side to first and second piezoelectric elements (114a-114h; 214a-214c & 116a, 116h; 216a, 216c), said movable electromagnets and said first and second piezoelectric elements having a degree of freedom of movement relative to said movable portion.

**2.** An electric actuator according to claim 1, wherein the stationary portion is a stator of a rotary actuator (104), the movable portion is a rotor of a rotary actuator (102), and said degree of freedom of movement is a degree of freedom to rotate about an axis of rotation of said rotor.

**3.** An electric actuator according to claim 1 or claim 2, wherein each piezoelectric element is made up of a series of N ceramics arranged in one or more layers.

**4.** An electric actuator according to claim 3, wherein said piezoelectric element comprises two superposed layers of ten ceramics arranged in parallel.

**5.** An electric actuator according to claim 3 or claim 4, wherein said stationary electromagnets constitute an integral portion of said stator, thus forming internal serrations.

**6.** An electric actuator according to any one of claims 1 to 5, wherein said stationary electromagnets are electrically connected in parallel to a first DC voltage source DC1 and said movable electromagnets are electrically connected in parallel to a second DC voltage source DC2.

**7.** An electric actuator according to claim 6, wherein said DC voltage sources deliver two opposite signals.

**8.** An electric actuator according to any one of claims 1 to 5, wherein said first piezoelectric element is electrically connected in parallel to a first AC voltage source AC1, and said second piezoelectric element is electrically connected in parallel to a second AC voltage source AC2.

**9.** An electric actuator according to claim 8, wherein said AC voltage sources deliver two sine-wave voltages of opposite phase that are **characterized by** the following relationships:

$$AC1 = A \sin \omega(t) \text{ et } AC2 = A \sin (\omega(t) + \pi).$$

**10.** A gas turbine engine including at least one electric actuator according to any one of claims 1 to 9.

**FIG.1**

**FIG.3**

**FIG.5**

FIG.2

108a

116a  110a  114a

114b  108b  130

110b

116b  102

108c

# FIG.4A

AC2

AC1  DC2

108a

116a  110a  114a

DC1

114b  108b  130

110b

116b  102

108c

# FIG.4B

**FIG.4C**

**FIG.4D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140286745 A

- US 7096657 B